# FASCICULE DE BREVET EUROPEEN

(11) **EP 3 290 753 B1**
(45) Date de publication et mention de la délivrance du brevet: **07.08.2019**
(21) Numéro de dépôt: 17187165.0
(22) Date de dépôt: 22.08.2017
(51) Int. Cl.: F16J 1/22, F01P 3/10, F01M 1/06, F16J 1/24, F16C 11/06

(54) **ENSEMBLE PISTON BIELLE ROTULEE AVEC AUGMENTATION DE VITESSE D'UN FLUX D HUILE INTERNE**
ANORDNUNG AUS KOLBEN UND KUGELKOPF-PLEUELSTANGE MIT STEIGERUNG DER ÖLSTRÖMUNGSGESCHWINDIGKEIT IM INNERN
HINGED PISTON AND ROD ASSEMBLY WITH SPEED INCREASE OF AN INTERNAL OIL STREAM

(30) Priorité: 01.09.2016 FR 1658112
(43) Date de publication de la demande: 07.03.2018
(73) Titulaire: PSA Automobiles SA, 78300 Poissy (FR)
(72) Inventeur: PETIT, BENJAMIN, 92500 RUEIL MALMAISON (FR); POGAM, MATTHIEU, 78400 CHATOU (FR)

(56) Documents cités:
- EP-A1- 0 731 886
- CH-A- 389 989
- FR-A- 1 373 309
- FR-A1- 3 005 132

## Description

La présente invention concerne un ensemble formé d'un piston et d'une bielle avec rotule entre le piston et la bielle présentant un passage pour un flux d'huile de lubrification, cet ensemble présentant des moyens d'augmentation de la vitesse du flux d'huile interne à l'ensemble. L'ensemble est logé au moins partiellement dans un cylindre de moteur à combustion interne, notamment mais pas uniquement pour un véhicule automobile.

De manière classique pour un moteur à combustion interne, celui-ci comprend au moins un cylindre comportant en son intérieur une chemise dans laquelle est mobile en un mouvement de va-et-vient un piston relié à une bielle par une liaison pivot avec la bielle.

Par exemple, un cycle de fonctionnement d'un « moteur à quatre temps » se décompose de manière analytique en quatre temps ou phases. Le mouvement du piston est initié par la combustion d'un mélange de carburant et d'air qui a lieu durant un temps du moteur.

Le piston se déplace lors du démarrage du moteur grâce à une source d'énergie externe, par exemple un démarreur ou un lanceur jusqu'à ce qu'au moins un temps du moteur produise une force capable d'assurer les trois autres temps avant le prochain temps du moteur. Le moteur fonctionne dès lors seul, donc sans le démarreur, et produit un couple sur son arbre de sortie.

Il est connu d'effectuer une lubrification entre les éléments mobiles et fixes du moteur par de l'huile de lubrification pour diminuer les frottements. Le piston est muni de segments entourant une portion de la périphérie du piston pour effectuer entre autres une étanchéité de l'huile de lubrification. Cet ensemble bielle et piston avec ses éléments auxiliaires est dénommé attelage mobile. Le piston, les segments et la chemise du cylindre forment le poste segment-piston-chemise aussi connu sous l'abréviation poste SPC.

Pour optimiser la performance et l'efficience des moteurs à combustion, il est nécessaire de faire évoluer tous les facteurs, liaisons et/ou mécanismes qui permettent la transmission de puissance, de la combustion des énergies fossiles au coeur des cylindres à la puissance disponible par le vilebrequin. Ceci concerne tout particulièrement l'attelage mobile et le poste SPC, les éléments composant cet attelage et ce poste étant générateurs de perte de puissance par frottement.

En ce qui concerne les pertes mécaniques par frottement d'un moteur à combustion interne conventionnel, l'attelage mobile et le poste SPC représentent une partie non négligeable de ces pertes mécaniques par frottement dans un moteur. Une partie de ces pertes peut être imputée à la cinématique même de la liaison piston-bielle traditionnelle en pivot.

La rotation du vilebrequin implique en effet une translation de type glissière entre le piston et la chemise, passant par une position haute, dite PMH pour Point Mort Haut et une position basse, dite PMB pour Point Mort Bas. La vitesse différentielle entre le piston et la chemise ralentit donc à l'approche de ces positions pour même s'y annuler.

L'établissement d'une vitesse très faible voire nulle au Point Mort Haut et au Point Mort Bas durant le fonctionnement d'un moteur à combustion interne implique des régimes de lubrification limite qui engendrent un frottement important métal contre métal, car les surfaces en vis-à-vis des éléments fixes et mobiles ne sont plus séparées par un film d'huile de lubrification ou seulement par un film d'épaisseur insuffisante. Cela crée donc des pertes mécaniques par frottement, aussi connues sous l'abréviation de PMF à ces deux points de fonctionnement du moteur.

Pour diminuer les frottements dans l'attelage mobile, il est connu d'utiliser une articulation entre la bielle et le piston comprenant une rotule. Une telle articulation autorise la rotation du piston autour d'un axe qui lui est central. Un canal central aménagé dans le corps de la bielle alimente la rotule en huile de lubrification.

Avec une telle articulation pourvue d'une rotule entre la bielle et le piston, contrairement à une glissière conventionnelle d'un attelage mobile, une liaison pivot glissant est dans ce cas possible entre le piston et la chemise. Ce pivot supplémentaire, selon l'axe principal du piston et l'axe de la chemise, permet au point mort haut PMH et au point mort bas PMB de garder une vitesse différentielle entre le piston et la chemise et ainsi de garder un film d'huile de lubrification permettant d'obtenir un frottement réduit.

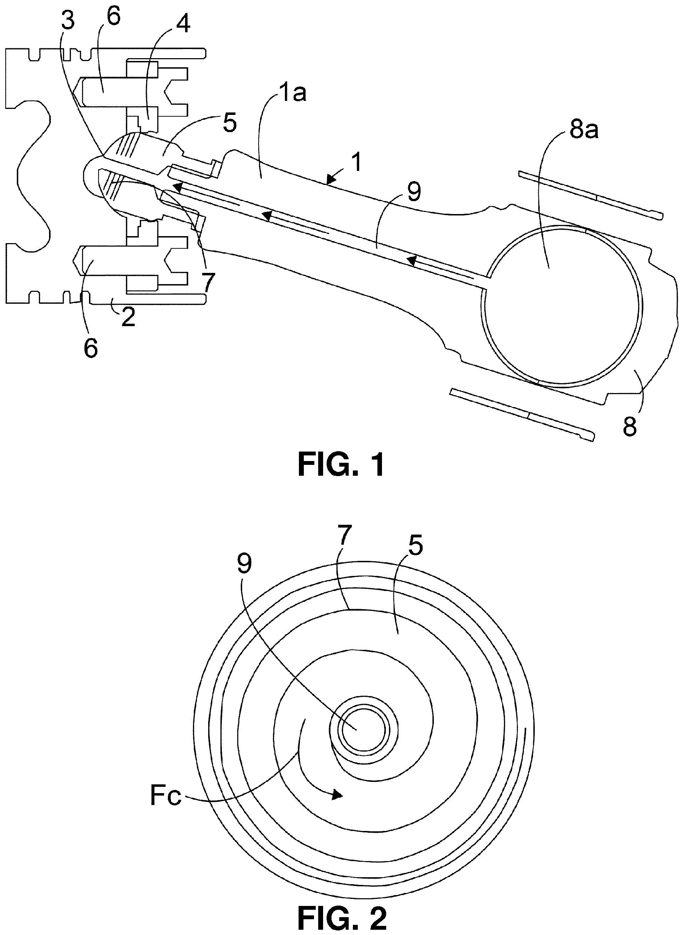

Ceci est illustré aux figures 1 et 2. A la figure 1, il est illustré un ensemble comprenant une bielle 1 et un piston 2 mobile dans un cylindre non représenté. Le piston 2 mobile présente un axe longitudinal médian et est articulé sur la bielle 1 par une liaison rotule entre un volume sphérique du piston et un volume sphérique 5 de la bielle porté par un pied de bielle 1 introduit dans le piston 2.

La bielle 1 présente une tête 8 de bielle du côté opposé à celui portant le volume sphérique 5 de la bielle. La tête 8 de bielle présente un oeilleton 8a destiné à être traversé par un vilebrequin. Entre la tête 8 de bielle et l'autre extrémité portant le volume sphérique 5 s'étend un corps 1a de bielle sensiblement longiforme.

Dans un tel mode de réalisation d'une articulation à rotule entre le piston 2 et la bielle 1, une contre-rotule 4 est présente sur une face du piston 2 tournée vers la bielle 1 au niveau du raccordement du volume sphérique 5 de la bielle au corps 1a de bielle. Des moyens de solidarisation 6 de la contre-rotule 4 avec le piston 2 sont prévus, par exemple sous la forme de vis.

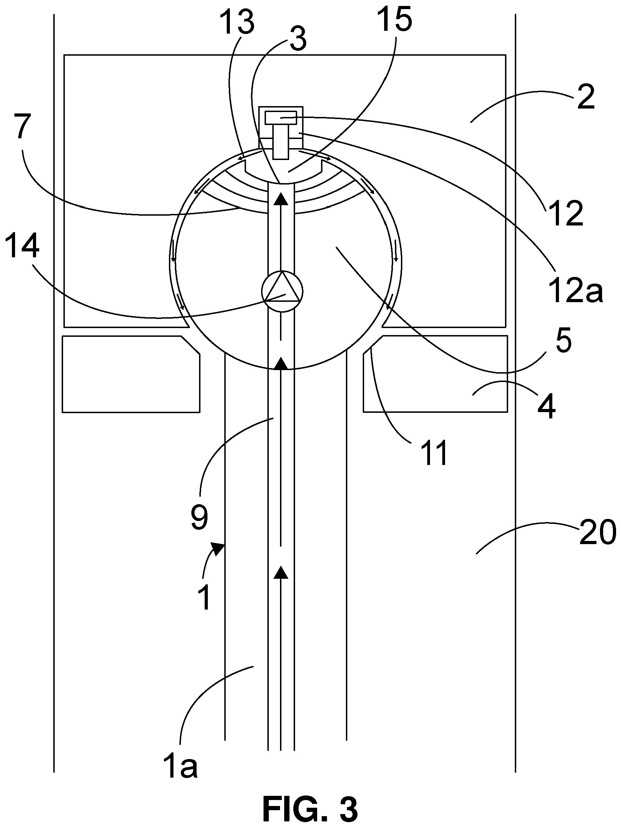

Le corps 1a et le volume sphérique 5 de la bielle 1 sont traversés par un canal 9 longitudinal d'huile de lubrification débouchant par une ouverture de sortie 3 à une portion du volume sphérique 5 de la bielle la plus interne au piston 2. L'huile, en sortie du canal 9, s'écoule dans un intervalle, plus tard référencé 13 à la figure 3, entre les volumes sphériques 5 en vis-à-vis du piston 2 et de la bielle 1.

Comme il est visible à la figure 2, tout en se référant à la figure 1 pour les références qui ne sont pas indiquées à la figure 2, le volume sphérique 5 de la bielle présente des formes spiroïdales 7, par exemple des rainures s'étendant en éloignement de l'axe longitudinal médian de la bielle 1 débouchant par une portion du volume sphérique 5 de la bielle la plus interne au piston 2. La flèche Fc indiquée à la figure 2 illustre le sens de circulation de l'huile de lubrification sortant du canal 9 d'huile de lubrification de la bielle 1.

La mise en rotation du piston 2 est provoquée à l'aide des formes spiroïdales 7 usinées sur le volume sphérique 5 de la bielle, avantageusement des rainures spiroïdales 7. La circulation de l'huile de lubrification dans les formes spiroïdales 7 va, par frottement visqueux, faire tourner le piston 2 autour de son axe longitudinal médian.

L'utilisation d'une liaison de type piston et bielle rotulée permet de repousser le niveau de charge maximale acceptable en diminuant les pertes mécaniques du moteur par frottement, notamment sur un cycle moteur à quatre temps classique.

Néanmoins, pour certains groupes motopropulseurs délivrant de trop fortes charges, la mise en rotation du piston pourrait être compromise si les formes d'aide à la rotation restent uniquement implantées sur la liaison rotule. De plus, les pressions dans un cylindre étant telles sur certaines applications que l'implantation de formes spécifiques sur la rotule pourraient faire diminuer les niveaux de couple souhaités.

Il est possible de modifier certains paramètres de l'huile de lubrification ou d'amenée d'huile pour accroître la mise en rotation du piston. Les principaux paramètres sont la viscosité de l'huile de lubrification, le maintien d'un flux d'huile de lubrification sans perte, par exemple en empêchant un retour d'huile de lubrification dans le canal d'amenée d'huile traversant la bielle et la vitesse du flux d'huile de lubrification entre les volumes sphériques du piston et de la bielle.

Les documents CH 389 989 et EP 0 731 886 B1 décrivent des ensembles bielle-piston comprenant une liaison sphérique avec des moyens d'augmentation de la vitesse de circulation du flux d'huile aménagés dans la bielle.

Le document WO-A-2009/046558 décrit un système pour la lubrification d'une liaison rotulée entre une bielle et un palier. Le système présente notamment une cavité dans laquelle débouche le canal pratiqué dans la bielle. Il est prévu un dispositif à bille et ressort qui joue le rôle de clapet anti-retour. Il est aussi prévu une pièce positionnée au-dessus du clapet, logée dans le palier dans le but d'éviter un déplacement trop important de la bille du clapet en formant une butée.

Premièrement, ce document a trait aux pompes à piston plongeur à entraînements par bielle. L'utilisation pour un piston rotulé de moteur à combustion n'est pas évoquée dans ce document. Deuxièmement, si ce document décrit un clapet anti-retour empêchant une perte de flux d'huile de lubrification, ce document ne donne aucune indication quant à une augmentation de la vitesse du flux d'huile dans la liaison rotulée.

Or, des calculs établis par la demanderesse montrent que la vitesse de l'huile de lubrification apparaît comme un point important dans la mise en rotation du piston, ceci même devant la viscosité de l'huile de lubrification. Il a été constaté que les vitesses d'huile de lubrification trop limites au niveau de la liaison rotule ne permettent pas tout le temps de créer assez de couple de mise en rotation.

Par conséquent, le problème à la base de l'invention est, pour un ensemble piston et bielle rotulé, de permettre en partant d'une bielle de l'état de la technique présentant un canal longitudinal d'huile de lubrification alimentant l'intervalle entre les volumes sphériques en vis-à-vis du piston et de la bielle, d'augmenter la mise en rotation du piston lors du passage de l'huile de lubrification dans un tel ensemble.

Pour atteindre cet objectif, il est prévu selon l'invention un ensemble comprenant une bielle et un piston destiné à être mobile dans un cylindre en présentant un axe longitudinal médian et en étant articulé sur la bielle par une liaison rotule entre un volume sphérique du piston et un volume sphérique de la bielle porté par un pied de bielle introduit dans le piston, un corps longiforme de la bielle, portant le volume sphérique à une de ses extrémités, étant traversé par un canal longitudinal d'huile de lubrification débouchant à une portion du volume sphérique de la bielle la plus interne au piston par une sortie, un flux d'huile, en sortie du canal, s'écoulant dans un intervalle entre les volumes sphériques en vis-à-vis du piston et de la bielle, caractérisé en ce qu'il comprend des moyens d'augmentation de la vitesse de circulation du flux d'huile en sortie du canal, ces moyens d'augmentation de la vitesse étant portés par le piston en débouchant sur une paroi du volume sphérique du piston.

Il a été montré par calcul que la vitesse de l'huile de lubrification a une grande influence sur la mise en rotation du piston autour de son axe médian. Il est donc important de trouver un système facilement industrialisable permettant de pallier la problématique d'une mise en rotation du piston insuffisante.

Selon l'invention, il a été procédé principalement à une augmentation de la vitesse du flux d'huile de lubrification passant par les rainures présentées par le volume sphérique de la bielle. La mise en rotation du piston en est considérablement augmentée tout en ne requérant qu'une adaptation spécifique simple c'est-à-dire l'ajout de moyens d'augmentation de la vitesse d'huile de lubrification dans l'ensemble bielle piston.

L'amenée d'huile de lubrification par un canal longitudinal pratiqué dans la bielle déjà présent dans de nombreuses bielles reste sensiblement inchangé et la présente invention peut être adaptée sur une telle bielle déjà existante moyennant quelques adaptations concernant l'ajout des moyens d'augmentation de la vitesse du flux d'huile.

L'huile de lubrification a tout d'abord un rôle de refroidissement et de lubrification mais peut aussi servir à faciliter une rotation du piston par rapport au cylindre. Ainsi, les pertes mécaniques par frottement aux points morts hauts et bas sont diminuées. Il n'est plus requis de transformer les formes spécifiques des rainures extérieures circulaires pour accroître la mise en rotation du piston.

Les consommations de CO2 sont en conséquence diminuées. La diminution des pertes par frottements du fait de la mise en rotation augmentée du piston autour de son axe peut engendrer une diminution des rejets de CO2 d'environ 1 g de CO2/km.

Par l'ajout de moyens d'augmentation de la vitesse de l'huile, il est possible de faire tourner le piston tout au long de sa course durant le cycle d'un moteur quatre temps, quelques soient les conditions de fonctionnements du moteur. Ceci peut permettre d'amplifier la rotation du piston déjà obtenue par des rainures hélicoïdales sur le volume sphérique de la bielle formant la liaison rotule avec le volume sphérique du piston dans l'intervalle de passage du flux d'huile de lubrification et de la garantir en toutes circonstances.

Les moyens d'augmentation de la vitesse étant portés par le piston en débouchant sur le volume sphérique du piston, ceux-ci suivent alors le mouvement de va-et-vient du piston ainsi que son mouvement de rotation ce qui diminue leur inertie initiale.

Dans un premier mode de réalisation de l'invention, les moyens d'augmentation de la vitesse sont sous la forme d'une pompe à piston logée dans un logement pratiqué dans la bielle ou dans le piston, un mouvement de va-et-vient du vérin s'effectuant selon l'axe longitudinal de la bielle.

Dans un deuxième mode de réalisation de l'invention, les moyens d'augmentation de la vitesse sont sous la forme d'une turbine, la turbine présentant des rainures hélicoïdales et tournant autour d'un axe confondu avec l'axe longitudinal de la bielle.

Dans les deux modes de réalisation de l'invention, les moyens d'augmentation comme une pompe à piston ou une turbine présentent un encombrement réduit et sont facilement logeables dans le piston ou la bielle, avantageusement le piston car en vis-à-vis de la sortie du canal d'huile de lubrification.

Avantageusement, une cavité de réception de l'huile est pratiquée dans le volume sphérique de la bielle à proximité de la sortie du canal, les moyens d'augmentation de la vitesse du flux étant actifs sur l'huile contenue dans la cavité de réception en étant portés par le volume sphérique de la bielle ou par le piston. Ceci permet d'avoir une quantité d'huile suffisante sur laquelle s'appliquent les moyens d'augmentation de la vitesse d'huile. Cette cavité de réception permet aussi de dégager de l'espace et d'éviter que les moyens d'augmentation de la vitesse n'interfèrent directement avec le volume sphérique de la bielle quand ces moyens d'augmentation de la vitesse sont portés par le piston.

Avantageusement, le volume sphérique de la bielle comporte des rainures extérieures circulaires pour le passage du flux d'huile, les rainures formant une spirale centrée sur une extrémité de sortie du canal d'huile de lubrification de la bielle. L'état de la technique recherchait une augmentation de ces rainures ou de leur dimension. Ce n'est plus nécessaire selon la présente invention, l'augmentation de la vitesse du flux d'huile de lubrification étant beaucoup plus efficace sur la mise en rotation du piston que des rainures élargies, plus profondes ou plus nombreuses.

Avantageusement, le canal d'huile de lubrification comporte un clapet anti-retour en amont de la sortie du canal. Ceci est un deuxième paramètre influant sur la mise en rotation du piston. Un retour d'une partie d'huile de lubrification par le canal de la bielle affaiblirait la mise en rotation du piston. Ceci est évité par la présente du clapet anti-retour dans le canal de passage d'huile dans la bielle.

Avantageusement, le canal longitudinal d'huile de lubrification part d'un oeilleton destiné à la réception d'un vilebrequin porté par une tête de bielle étant la partie de la bielle opposée au volume sphérique de la bielle et l'ensemble comporte une contre-rotule présente en vis-à-vis d'une face du piston tournée vers la bielle au niveau du raccordement du volume sphérique de la bielle au corps de bielle.

L'invention concerne aussi un cylindre logeant au moins partiellement un ensemble piston et bielle, le piston étant mobile en translation dans le cylindre, caractérisé en ce que l'ensemble piston et bielle est tel que précédemment mentionné.

La présente description concerne aussi un procédé de lubrification d'un intervalle entre des volumes sphériques en vis-à-vis d'un piston et d'une bielle par un flux d'huile de lubrification traversant dans sa longueur la bielle et débouchant par un canal de la bielle entre les volumes sphériques du piston et de la bielle, caractérisé en ce qu'il est effectué une mise sous pression ou une mise en rotation du flux d'huile de lubrification au débouché du canal suffisante pour augmenter sa vitesse de circulation dans l'intervalle.

L'ordre de grandeur du débit total du flux d'huile de lubrification espéré transitant de la bielle vers le carter est aujourd'hui de 2 litres par minute ou 2l/mn, en passant donc par la canalisation de tête de bielle vers le pied de bielle entre les volumes sphériques du piston et de la bielle.

Plus de débit impliquerait plus de travail hydraulique de la pompe à huile du moteur, ce qui n'est pas souhaité. Moins de débit impliquerait un risque de grippage des volumes sphériques de la rotule et ne serait pas favorable à la création de couple. Cette deuxième possibilité est dépendante de la perméabilité du circuit hydraulique. Si la perméabilité est trop élevée, un débit de 2l/min est inatteignable pour une pression de régulation de la pompe hydraulique qui est entre 2 et 5 bars.

Conformément à la présente invention, un tel débit cible de 2l/mn peut être atteint par une augmentation de vitesse de l'huile de lubrification créée par les moyens d'augmentation de vitesse de l'ensemble.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une coupe longitudinale d'un ensemble piston et bielle rotulée selon l'état de la technique,
- la figure 2 est une représentation schématique d'une vue de dessus du volume sphérique de la bielle rotulée montrée dans l'ensemble à la figure 1,
- la figure 3 est une représentation schématique d'une coupe longitudinale d'un ensemble piston et bielle rotulée intégrés dans un cylindre selon la présente invention avec passage d'huile de lubrification par un canal dans la longueur de la bielle, un flux d'huile provenant de ce passage présentant une vitesse augmentée sous l'action de moyens d'augmentation de la vitesse selon un premier mode de réalisation de l'invention,
- la figure 4 est une représentation schématique d'une coupe longitudinale d'un ensemble piston et bielle rotulée intégrés dans un cylindre selon la présente invention avec passage d'huile de lubrification par un canal dans la longueur de la bielle, un flux d'huile provenant de ce passage présentant une vitesse augmentée sous l'action de moyens d'augmentation de la vitesse selon un deuxième mode de réalisation de l'invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Les figures 1 et 2 ont déjà été détaillées dans la partie introductive de la présente demande.

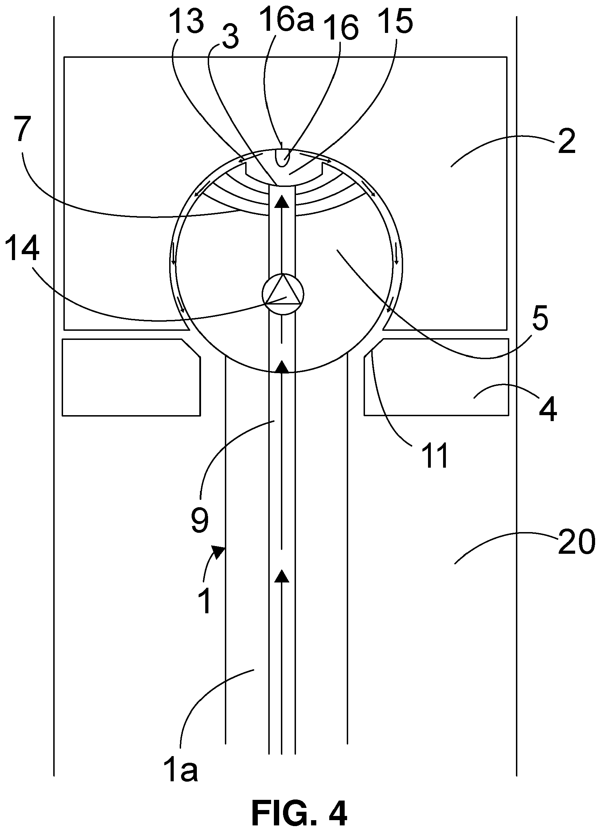

En se référant notamment aux figures 3 et 4, la présente invention concerne un ensemble d'un piston 2 et d'une bielle 1 rotulée logés dans un cylindre 20 reprenant certaines des caractéristiques de l'ensemble selon l'état de la technique et montré à la figure 1.

Cet ensemble comprend dans un cylindre 20 une bielle 1 dite rotulée et un piston 2 mobile dans le cylindre 20 en présentant un axe longitudinal médian. Le piston 2 est articulé sur la bielle 1 par une liaison rotule entre un volume sphérique du piston et un volume sphérique 5 de la bielle porté par un pied de bielle 1 introduit dans le piston 2, le volume sphérique du piston 2 n'étant pas référencé aux figures.

Une contre-rotule 4 peut être présente sur une face du piston 2 tournée vers la bielle 1 au niveau du raccordement du volume sphérique 5 de la bielle à un corps 1a de bielle, en étant disposée au niveau de ce raccordement c'est-à-dire en étant plus éloigné de la tête de bielle qui n'est pas visible aux figures 3 et 4 mais l'était à la figure 1.

La contre-rotule 4 peut présenter une portion de bord biseautée 11 pour aider à l'évacuation du flux d'huile de lubrification qui coule tout d'abord autour du volume sphérique 5 de la bielle 1 et ensuite le long du corps 1 a de la bielle 1.

En se référant aux figures 1, 3 et 4, la bielle 1 présente donc une tête 8 de bielle portant un oeilleton 8a destiné à la réception d'un vilebrequin. La tête 8 de bielle est prolongée par un corps 1a de bielle 1 sensiblement longiforme et se termine par un pied de bielle 1. Le pied de bielle 1 est donc la partie de la bielle 1 portant le volume sphérique 5 de la bielle et est donc opposé à la tête 8 de bielle.

Le corps 1a et le volume sphérique 5 de la bielle sont traversés par un canal 9 longitudinal d'huile de lubrification débouchant à une portion du volume sphérique 5 de la bielle la plus interne au piston 2 par une ouverture de sortie 3. Le canal 9 longitudinal peut partir de l'oeilleton 8a destiné à la réception d'un vilebrequin porté par une tête 8 de bielle.

Un flux d'huile, en sortie du canal 9, s'écoule dans un intervalle 13 entre les volumes sphériques 5 en vis-à-vis du piston 2 et de la bielle 1. Selon l'invention, l'ensemble comprend des moyens d'augmentation 12, 16 de la vitesse de circulation du flux d'huile en sortie du canal 9.

Les moyens d'augmentation 12, 16 de la vitesse sont insérés dans l'ensemble de sorte à ne pas accroître l'encombrement de l'ensemble. Les moyens d'augmentation 12, 16 peuvent être portés par le piston 2 en débouchant sur une paroi du volume sphérique du piston 2 ou portés par le volume sphérique 5 de la bielle 1.

Deux principaux modes de réalisation de la présente sont montrés respectivement aux figures 3 et 4 et vont être maintenant décrits. Ces deux principaux modes ne sont cependant pas limitatifs.

En se référant à la figure 3, pour le premier mode de réalisation, les moyens d'augmentation 12, 16 de la vitesse peuvent être sous la forme d'une pompe à piston 12 logée dans un logement 12a pratiqué dans la bielle 1 ou dans le piston 2. Un mouvement de va-et-vient du piston de la pompe 12 s'effectue selon l'axe longitudinal de la bielle 1.

En se référant à la figure 4, pour le deuxième mode de réalisation, les moyens d'augmentation 12, 16 de la vitesse peuvent être sous la forme d'une turbine 16. La turbine 16 peut présenter des rainures hélicoïdales et tourner autour d'un axe 16a confondu avec l'axe longitudinal de la bielle 1.

Pour les deux modes de réalisation, une cavité de réception 15 de l'huile est pratiquée dans le volume sphérique 5 de la bielle 1 à proximité de la sortie du canal 9, les moyens d'augmentation 12, 16 de la vitesse du flux étant actifs sur l'huile contenue dans la cavité de réception 15 en étant portés par le piston 2.

Le volume sphérique 5 de la bielle 1 peut comporter des rainures 7 extérieures circulaires pour le passage du flux d'huile. Les rainures 7 peuvent former une spirale centrée sur une extrémité de sortie du canal 9 d'huile de lubrification du piston.

Afin d'empêcher un retour d'un flux partiel d'huile de lubrification dans le canal d'huile, le canal 9 d'huile de lubrification traversant longitudinalement la bielle 1 peut comporter un clapet anti-retour 14 en amont de la sortie du canal. Le clapet anti-retour 14 peut être logé dans le canal 9 à l'intérieur du volume sphérique 5 de la bielle 1, donc à proximité de l'ouverture de sortie 3 du canal 9 entre les volumes sphériques 5 de la bielle et du piston 2.

L'invention concerne aussi un cylindre 20 logeant au moins partiellement un ensemble piston 2 et bielle 1, le piston 2 étant mobile en translation dans le cylindre 20. Selon l'invention, l'ensemble piston 2 et bielle 1 est tel que précédemment mentionné.

L'invention concerne enfin un procédé de lubrification d'un intervalle 13 entre des volumes sphériques 5 en vis-à-vis d'un piston et d'une bielle 1 par un flux d'huile de lubrification traversant dans sa longueur la bielle 1 et débouchant par un canal 9 de la bielle 1 entre les volumes sphériques 5 de la bielle 1 et du piston 2. Selon l'invention, il est effectué une mise sous pression ou une mise en rotation du flux d'huile de lubrification au débouché du canal suffisante pour augmenter sa vitesse de circulation dans l'intervalle.

Pour le premier mode de réalisation de l'invention avec des moyens d'augmentation 12 de la vitesse de l'huile entre les volumes sphériques 5 de la bielle 1 et du piston étant une pompe à piston 12, la première étape du procédé est de faire circuler l'huile de lubrification et de refroidissement dans la bielle 1 à l'aide d'un canal 9 réalisé entre la tête 8 de bielle 1 et le pied de bielle 1 qui porte le volume sphérique 5 de la bielle 1.

Le piston de la pompe à piston 12 va profiter du mouvement alternatif dans le cylindre 20 du piston 2 de l'ensemble bielle et piston pour se mouvoir alternativement. Le piston de la pompe 12 va chasser une partie du volume d'huile se trouvant dans la cavité de réception 15 pratiquée dans le volume sphérique 5 de la bielle 1 vers les rainures 7 circulaires pratiquées à la périphérie externe de ce volume sphérique 5 de la bielle 1, avantageusement sous forme hélicoïdale en augmentant ainsi la vitesse de circulation de l'huile de lubrification dans l'intervalle 13 entre volumes sphériques 5 de la bielle 1 et du piston 2.

Le piston de la pompe 12 peut être rapporté à l'intérieur du piston 2 de l'ensemble par vissage ou emmanchement de son logement 12a. Le volume sphérique 5 de la bielle 1 dans la rotule est muni d'une cavité de réception 15 assez grande pour accumuler suffisamment d'huile avant éjection de l'huile vers les rainures 7 et ne pas entrer en collision avec le piston de la pompe 12. Un clapet anti-retour 14 positionné dans le canal de la bielle 1 vient empêcher l'huile de repartir dans la bielle 1 en sens inverse.

Lors de la troisième étape, une fois l'huile chassée par pression par le piston de la pompe 12, l'huile sera dirigée avec une plus grande vitesse que sa vitesse dans le canal 9 de la bielle 1 vers les rainures 7 du volume sphérique 5 de la bielle 1 afin de mettre en rotation le piston 2 de l'ensemble.

Pour le deuxième mode de réalisation de l'invention avec des moyens d'augmentation 16 de la vitesse de l'huile entre les volumes sphériques 5 de la bielle 1 et du piston étant une turbine 16 avantageusement hélicoïdale tournant autour d'un axe 16a aligné avec le canal 9 ou l'axe longitudinal de la bielle 1, les première et troisième étapes du procédé sont les mêmes que pour le premier mode de réalisation.

Lors de la deuxième étape, la turbine 16 hélicoïdale va être mise en mouvement par la pression de l'huile provenant de la cavité de réception 15 à la sortie 3 du canal 9 d'huile de lubrification de la bielle 1 et chasser tout ou une partie du volume d'huile se trouvant dans la cavité de réception 15 vers les rainures 7 du volume sphérique 5 de la bielle 1 en augmentant ainsi sa vitesse de circulation.

La turbine 16, avantageusement hélicoïdale, est montée sur un axe 16a qui est lui-même fixé dans le piston 2 par vissage ou emmanchement. Les mêmes conditions énoncées pour la cavité de réception 15 et pour le clapet anti-retour 14 du premier mode s'appliquent aussi pour le deuxième mode.

L'invention n'est nullement limitée aux modes de réalisation décrits et illustrés qui n'ont été donnés qu'à titre d'exemples. Cependant l'invention est limitée par l'étendue des revendications en annexe.

## Revendications

1. Ensemble comprenant une bielle (1) et un piston (2) destiné à être mobile dans un cylindre (20) en présentant un axe longitudinal médian et en étant articulé sur la bielle (1) par une liaison rotule entre un volume sphérique du piston (2) et un volume sphérique (5) de la bielle (1) porté par un pied de bielle (1) introduit dans le piston (2), un corps (1a) longiforme de la bielle (1), portant le volume sphérique (5) à une de ses extrémités, étant traversé par un canal (9) longitudinal d'huile de lubrification débouchant à une portion du volume sphérique (5) de la bielle (1) la plus interne au piston (2) par une sortie (3), un flux d'huile, en sortie du canal (9), s'écoulant dans un intervalle (13) entre les volumes sphériques (5) en vis-à-vis du piston (2) et de la bielle (1), **caractérisé en ce qu'**il comprend des moyens d'augmentation (12, 16) de la vitesse de circulation du flux d'huile en sortie du canal (9), ces moyens d'augmentation (12, 16) de la vitesse étant portés par le piston (2) en débouchant sur une paroi du volume sphérique du piston (2).

2. Ensemble selon la revendication 1, dans lequel les moyens d'augmentation (12, 16) de la vitesse sont sous la forme d'une pompe à piston (12) logée dans un logement (12a) pratiqué dans la bielle (1) ou dans le piston (2), un mouvement de va-et-vient du piston de la pompe (12) s'effectuant selon l'axe longitudinal de la bielle (1).

3. Ensemble selon la revendication 1, dans lequel les moyens d'augmentation (12, 16) de la vitesse sont sous la forme d'une turbine (16), la turbine (16) présentant des rainures hélicoïdales et tournant autour d'un axe (16a) confondu avec l'axe longitudinal de la bielle (1).

4. Ensemble selon l'une quelconque des revendications précédentes, dans lequel une cavité de réception (15) de l'huile est pratiquée dans le volume sphérique (5) de la bielle (1) à proximité de la sortie du canal (9), les moyens d'augmentation (12, 16) de la vitesse du flux étant actifs sur l'huile contenue dans la cavité de réception en étant portés par le volume sphérique (5) de la bielle (1) ou par le piston (2).

5. Ensemble selon l'une quelconque des revendications précédentes, dans lequel le volume sphérique (5) de la bielle (1) comporte des rainures (7) extérieures circulaires pour le passage du flux d'huile, les rainures (7) formant une spirale centrée sur une extrémité de sortie du canal (9) d'huile de lubrification de la bielle (1).

6. Ensemble selon l'une quelconque des revendications précédentes, dans lequel le canal (9) d'huile de lubrification comporte un clapet anti-retour (14) en amont de la sortie du canal (9).

7. Ensemble selon l'une quelconque des revendications précédentes, dans lequel le canal (9) longitudinal d'huile de lubrification part d'un oeilleton (8a) destiné à la réception d'un vilebrequin porté par une tête (8) de bielle (1) étant la partie de la bielle (1) opposée au volume sphérique (5) de la bielle (1) et l'ensemble comporte une contre-rotule (4) présente en vis-à-vis d'une face du piston (2) tournée vers la bielle (1) au niveau du raccordement du volume sphérique (5) de la bielle (1) au corps (1a) de bielle (1).

8. Cylindre (20) logeant au moins partiellement un ensemble piston (2) et bielle (1), le piston (2) étant mobile en translation dans le cylindre (20), **caractérisé en ce que** l'ensemble piston (2) et bielle (1) est selon l'une quelconque des revendications précédentes.

## Patentansprüche

1. Anordnung, die ein Pleuel (1) und einen Kolben (2) umfasst, der dazu bestimmt ist, in einem Zylinder (20) beweglich zu sein, indem er eine Mittenlängsachse aufweist und auf dem Pleuel (1) durch eine Kugelkopfverbindung zwischen einem sphärischen Volumen des Kolbens (2) und einem sphärischen Volumen (5) des Pleuels (1), das von einem Pleuelfuß (1) getragen wird, der in den Kolben (2) eingefügt ist, angelenkt ist, wobei ein länglicher Körper (1a) des Pleuels (1), der das sphärische Volumen (5) an einem seiner Enden trägt, von einem Schmieröllängskanal (9) durchquert ist, der in einen Abschnitt des sphärischen Volumens (5) des Pleuels (1), der am weitesten innerhalb des Kolbens (2) liegt, durch einen Ausgang (3) mündet, wobei ein Ölstrom am Ausgang des Kanals (9) in einem Intervall (13) zwischen den sphärischen Volumen (5) gegenüber des Kolbens (2) und des Pleuels (1) fließt, **dadurch gekennzeichnet, dass** sie Mittel zum Steigern (12, 16) der Zirkulationsgeschwindigkeit des Ölstroms am Ausgang des Kanals (9) umfasst, wobei diese Mittel zum Steigern (12, 16) der Geschwindigkeit von dem Kolben (2) getragen werden, indem sie auf einer Wand des sphärischen Volumens des Kolbens (2) münden.

2. Anordnung nach Anspruch 1, wobei die Mittel zum Steigern (12, 16) der Geschwindigkeit die Form einer Kolbenpumpe (12) aufweisen, die in einer Aufnahme (12a), die in dem Pleuel (1) oder dem Kolben (2) angelegt ist, untergebracht ist, wobei eine Hin- und Herbewegung des Kolbens der Pumpe (12) entlang der Längsachse des Pleuels (1) erfolgt.

3. Anordnung nach Anspruch 1, wobei die Mittel zum Steigern (12, 16) der Geschwindigkeit die Form einer Turbine (16) aufweisen, wobei die Turbine (16) Spiralnuten aufweist und um eine Achse (16a) dreht, die mit der Längsachse des Pleuels (1) zusammenfällt.

4. Anordnung nach einem der vorstehenden Ansprüche, wobei ein Aufnahmehohlraum (15) des Öls in dem sphärischen Volumen (5) des Pleuels (1) nahe des Ausgangs des Kanals (9) angelegt ist, wobei die Mittel zum Steigern (12, 16) der Geschwindigkeit des Stroms auf dem Öl, das in dem Aufnahmehohlraum enthalten ist, aktiv sind, indem sie von dem sphärischen Volumen (5) des Pleuels (1) oder von dem Kolben (2) getragen werden.

5. Anordnung nach einem der vorstehenden Ansprüche, wobei das sphärische Volumen (5) des Pleuels (1) äußere kreisförmige Nuten (7) für das Durchgehen des Ölstroms umfasst, wobei die Nuten (7) eine Spirale bilden, die auf einem Ausgangsende des Schmierölkanals (9) des Pleuels (1) zentriert ist.

6. Anordnung nach einem der vorstehenden Ansprüche, wobei der Schmierölkanal (9) ein Rückschlagventil (14) stromaufwärts des Ausgangs des Kanals (9) umfasst.

7. Anordnung nach einem der vorstehenden Ansprüche, wobei der Schmieröl-Längskanal (9) von einer Kreisöffnung (8a) ausgeht, die zum Aufnehmen einer Kurbelwelle bestimmt ist, die von einem Kopf (8) des Pleuels (1) getragen wird, der Teil des Pleuels (1) ist, der dem sphärischen Volumen (5) des Pleuels (1) entgegengesetzt ist, und die Anordnung einen Gegenkugelkopf (4) umfasst, der gegenüber einer Fläche des Kolbens (2), die zu dem Pleuel (1) zeigt, im Bereich des Anschlusses des sphärischen Volumens (5) des Pleuels (1) an dem Körper (1a) des Pleuels (1) anwesend ist.

8. Zylinder (20), der mindestens teilweise eine Anordnung aus Kolben (2) und Pleuel (1) aufnimmt, wobei der Kolben (2) in Verschiebung in dem Zylinder (20) beweglich ist, **dadurch gekennzeichnet, dass** die Anordnung aus Kolben (2) und Pleuel (1) einem der vorstehenden Ansprüche entspricht.

## Claims

1. An assembly including a rod (1) and a piston (2) intended to be mobile in a cylinder (20) having a median longitudinal axis and being articulated on the rod (1) by a ball joint coupling between a spherical volume of the piston (2) and a spherical volume (5) of the rod (1) carried by a rod small end (1) introduced into the piston (2), an elongated body (1a) of the rod (1), carrying the spherical volume (5) at one of its ends, being traversed by a longitudinal duct (9) of lubricating oil, opening at a most internal portion of the spherical volume (5) of the rod (1) to the piston (2) by an outlet (3), a stream of oil, exiting the duct (9), flowing in a gap (13) between the spherical volumes (5) facing the piston (2) and the rod (1), **characterized in that** it includes increasing means (12, 16) of the circulation speed of the stream of oil exiting the duct (9), these increasing means (12, 16) of the speed being carried by the piston (2), opening on a wall of the spherical volume of the piston (2).

2. The assembly according to Claim 1, in which the speed increasing means (12, 16) are in the form of a piston pump (12), housed in a housing (12a) formed in the rod (1) or in the piston (2), a to-and-fro movement of the piston of the pump (12) occurring along the longitudinal axis of the rod (1).

3. The assembly according to Claim 1, in which the speed increasing means (12, 16) are in the form of a turbine (16), the turbine (16) having helicoidal grooves and turning about an axis (16a) coinciding with the longitudinal axis of the rod (1).

4. The assembly according to any one of the preceding claims, in which a reception cavity (15) of the oil is formed in the spherical volume (5) of the rod (1) close to the outlet of the duct (9), the means (12, 16) for increasing the speed of the stream being active on the oil contained in the reception cavity, being carried by the spherical volume (5) of the rod (1) or by the piston (2).

5. The assembly according to any one of the preceding claims, in which the spherical volume (5) of the rod (1) comprises exterior circular grooves (7) for the passage of the stream of oil, the grooves (7) forming a spiral centred on an outlet end of the lubricating oil duct (9) of the rod (1).

6. The assembly according to any one of the preceding claims, in which the lubricating oil duct (9) comprises a non-return valve (14) upstream of the outlet of the duct (9).

7. The assembly according to any one of the preceding claims, in which the longitudinal lubricating oil duct (9) originates from an eyelet (8a) intended to receive a crankshaft carried by a head (8) of rod (1), being the portion of the rod (1) opposite the spherical volume (5) of the rod (1), and the assembly comprises a counter-ball joint (4) present facing a face of the piston (2) turned towards the rod (1) at the level of the connection of the spherical volume (5) of the rod (1) to the body (1a) of the rod (1).

8. A cylinder (20) at least partially housing a piston (2) and rod (1) assembly, the piston (2) being movable in translation in the cylinder (20), **characterized in that** the piston (2) and rod (1) assembly is according to any one of the preceding claims.
